# EUROPÄISCHE PATENTSCHRIFT

(11) **EP 1 900 615 B1**
(45) Veröffentlichungstag und Bekanntmachung des Hinweises auf die Patenterteilung: **14.11.2012**
(21) Anmeldenummer: 07017044.4
(22) Anmeldetag: 31.08.2007
(51) Int. Cl.: B62D 25/12

(54) **Schutzabdeckeinrichtung an einem vorderen oder hinteren Wandbereich eines Fahrzeugs**
Protection cover device at the front or rear wall area of a vehicle
Dispositif de recouvrement de protection sur une zone pariétale avant ou arrière d'un véhicule

(30) Priorität: 12.09.2006 DE 102006042653
(43) Veröffentlichungstag der Anmeldung: 19.03.2008
(73) Patentinhaber: Bayerische Motoren Werke Aktiengesellschaft, 80809 München (DE)
(72) Erfinder: Dockweiler, Achim, 81829 München (DE); Müller, Michael, 80636 München (DE); Wolff, Thomas, Dr., 84028 Landshut (DE)

(56) Entgegenhaltungen:
- DE-A1- 10 304 014
- DE-C1- 19 813 393
- DE-U1-202006 012 371

## Beschreibung

Die Erfindung betrifft eine Schutzabdeckeinrichtung an einem vorderen oder hinteren Wandbereich eines Fahrzeugs, mit den im Oberbegriff des Patentanspruches 1 angegebenen Merkmalen.

Eine derartige Schutzabdeckeinrichtung weist in der DE 199 33 784 A1 ein in Betrachtungsrichtung vor der Frontklappe oder Heckklappe eines Kraftfahrzeugs angeordnetes Blendenelement auf, das an seinem oberen Rand fest oder um eine Fahrzeugquerachse schwenkbar mit der Frontklappe bzw. Heckklappe verbunden ist. Der untere Rand des Abdeckelements weist einen Abstand von der Frontklappe bzw. Heckklappe auf. Bei einem unfallbedingten Aufprall eines Gegenstandes oder einer Person auf das Abdeckelement kann der untere Bereich des Abdeckelements gegen die geringe Kraft einer vorgespannten Feder oder durch eine elastische und/oder plastische Verformung des Abdeckelements zu der Frontklappe oder Heckklappe auf Grund des Abstandes frei verstellt werden. Dadurch kann eine Beschädigung der betreffenden Frontklappe bzw. Heckklappe bei Unfällen verhindert werden, bei denen bei oder nach einer derartigen Verstellbewegung des unteren Bereiches des Abdeckelements keine größere Krafteinwirkung auf die Front- oder Heckklappe erfolgt. Dies wird beispielsweise dadurch erreicht, dass das Abdeckelement nachzugeben vermag und/oder beispielsweise aus einem Kunststoff gefertigt ist. Es wird davon ausgegangen, dass bei den meisten Unfällen das Abdeckelement zerstört wird. Ein derartiges Abdeckelement kann beim unfallbedingten Verstellen seines unteren Bereiches keine Energie aufnehmen, die den unfallbedingten Aufprall wesentlich mildern könnte.

Der Erfindung liegt die Aufgabe zu Grunde, eine Schutzabdeckeinrichtung mit den Merkmalen im Oberbegriff des Patentanspruches 1 anzugeben, die einen unfallbedingten Aufprall derart zusammen mit dem Stoßfänger abschwächen kann, dass keine Beschädigung des Wandbereiches erfolgt, an dem das Blendenelement befestigt ist.

Diese Aufgabe ist durch die Merkmale im Patentanspruch 1 gelöst. Vorteilhafte Ausgestaltungen der Erfindung sind den Unteransprüchen entnehmbar.

Das Blendenelement, das zumindest über einen horizontalen Bereich in einem vertikalen Fahrzeuglängsschnitt einen rahmenförmigen Querschnitt aufweist und zumindest einen Hohlraum einschließt, kann eine derartige, gegenüber der Frontklappe bzw. Heckklappe geringere Eigensteifigkeit aufweisen, dass das Blendenelement bei einem unfallbedingten Aufprall eines Gegenstandes oder einer Person zwar elastisch und/oder plastisch verformt wird, eine Beschädigung der Frontklappe oder Heckklappe jedoch vermieden ist.

Ein Ausführungsbeispiel der Erfindung wird nachfolgend anhand einer Zeichnung näher erläutert. Es zeigen
- Fig. 1: eine unverformte Schutzabdeckeinrichtung an der Heckklappe eines Kraftfahrzeugs,
- Fig. 2: die in Fig. 1 dargestellte Schutzabdeckeinrichtung nach einer unfallbedingten plastischen Verformung.

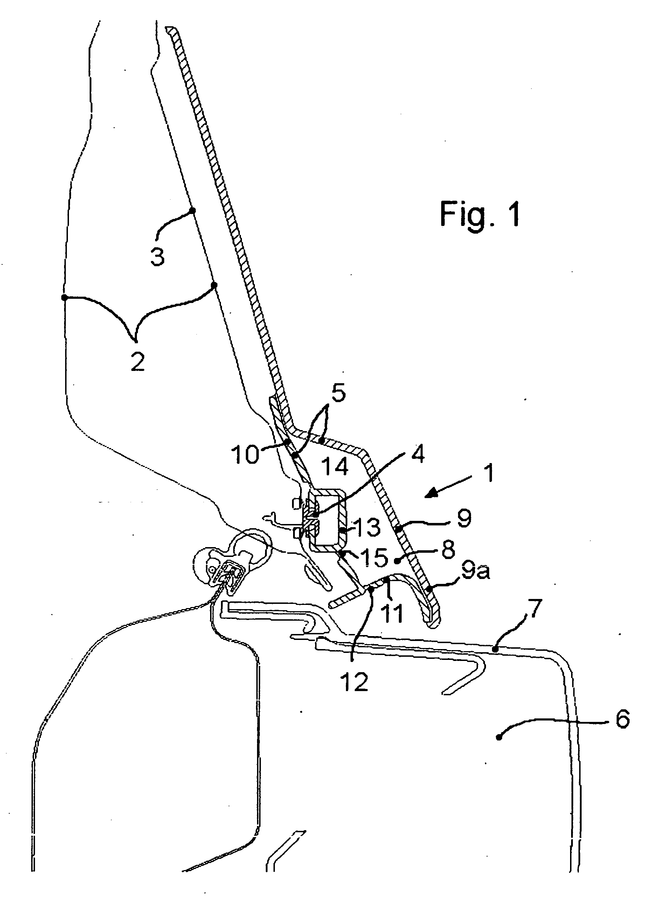

In Fig. 1 ist eine Schutzabdeckeinrichtung 1 an der Heckklappe 2 eines Kraftfahrzeugs dargestellt. Die Heckklappe 2 weist eine nicht dargestellte obere, etwa horizontale Abdeckwand auf, von der hinten ein Wandbereich 3 etwa vertikal nach unten absteht. Im unteren Bereich des Wandbereiches 3 ist über ein Befestigungselement 4 ein äußeres Blendenelement 5 befestigt. Das Blendenelement 5 ist mit seiner Längserstreckung in Fahrzeugquerrichtung etwa horizontal über einem hinteren Stoßfänger 6 angeordnet, der von einer Stoßfängerverkleidung 7 überdeckt ist. Das Blendenelement 5 weist zumindest über einen Bereich in Fahrzeugquerrichtung einen in einem vertikalen Fahrzeuglängsschnitt rahmenförmigen Querschnitt auf, der zumindest einen Hohlraum 8 einschließt.

Das Blendenelement 5 weist hinten eine äußere Sichtwand 9 auf, die sich über den rahmenförmigen Querschnitt hinaus nach oben erstreckt. Der den Hohlraum 8 einschließende Bereich des rahmenförmigen Querschnitts befindet sich somit im unteren Bereich des Blendenelements 5.

Das Blendenelement 5 weist eine etwa vertikale Befestigungswand 10 auf, die über das Befestigungsmittel 4 mit dem Wandbereich 3 der Heckklappe 2 verbunden ist und von vorn an den Hohlraum 8 angrenzt. Die äußere Sichtwand 9 des mit der Heckklappe 9 des Kraftfahrzeugs verbundenen Blendenelements 5 weist einen unteren Wandflächenbereich 9a auf, der bei geschlossener Heckklappe 2 - wie in Fig. 1 dargestellt - nach hinten unten gerichtet ist. Das Blendenelement 5 weist auch eine den Hohlraum 8 von unten begrenzende Wandung 11 auf, die bei geschlossener Heckklappe 2 - wie in Fig. 1 dargestellt - nach hinten oben gerichtet ist. Die Wandung 11 ist an ihrem hinteren oberen Bereich etwa parallel zu dem Wandflächenbereich 9a der Sichtwand 9 umgebogen bzw. abgewinkelt und mit dem Wandflächenbereich 9a verbunden.

Die den Hohlraum 8 des Blendenelements 5 von unten begrenzende Wandung 11 erstreckt sich bei geschlossener Heckklappe 2 über die mit dem Wandbereich 3 der Heckklappe 2 verbundene Befestigungswand 10 hinaus und steht nach vorne oder nach vorne unten vor. Die Wandung 11 weist wenigstens eine Kerbe 12 oder wenigstens eine Materialverdünnung auf, die bei einem unfallbedingten Aufprall eines Gegenstandes oder einer Person auf das Blendenelement 5 eine elastische und/oder plastische konvexe Verformung der unteren Wandung 11 des Blendenelements 5 nach oben erzwingt oder erleichtert.

Die Befestigungswand 10 ist in einem vertikal mittleren Bereich mit einem Aufnahmeprofil 13 für ein Befestigungselement 4 zum Verbinden des Blendenelements 5 mit dem Wandbereich 3 verbunden. An beiden Übergangsbereichen von dem Aufnahmeprofil 13 zu der Befestigungswand 10 ist jeweils eine Kerbe 14, 15 oder Materialverdünnung vorgesehen, wodurch sich die Befestigungswand 10 des Blendenelements 5 in einem Übergangsbereich oder in beiden Übergangsbereichen von dem mit dem Wandbereich 3 der Heckklappe 2 verbundenen Aufnahmeprofil 13 lösen kann, wenn bei einem unfallbedingten Aufprall eines Gegenstandes oder einer Person auf das Blendenelement 5 eine konstruktiv vorgegebene Grenzkraft auf den Wandbereich 3 der Heckklappe 2 übertragen wird, bei der sich der Wandbereich 3 allenfalls elastisch, jedoch nicht plastisch verformt.

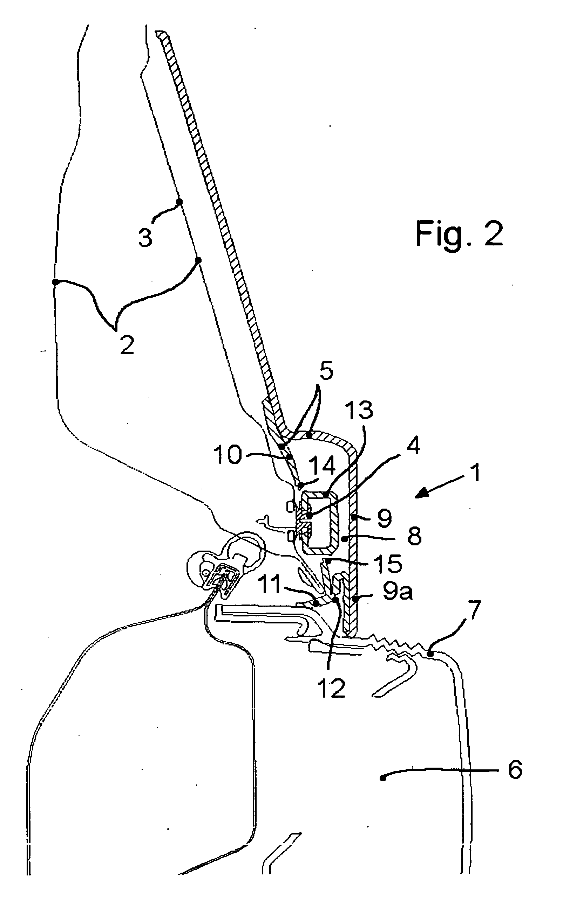

In Fig. 2 ist die in Fig. 1 dargestellte Schutzabdeckeinrichtung nach einem unfallbedingten Aufprall eines Gegenstandes, beispielsweise eines anderen Kraftfahrzeugs, oder einer Person dargestellt, wobei der Aufprall einerseits von dem Stoßfänger 6 und andererseits von dem Blendenelement 5 gedämpft wurde. Wie Fig. 2 veranschaulichen soll, kann bei einem unfallbedingten Aufprall beispielsweise durch elastische und plastische Verformungen des Stoßfängers und des Blendenelements 5 oder bei einem anderen Unfall beispielsweise lediglich durch elastische und/oder plastische Verformungen des Blendenelements 5 erreicht werden, dass dabei die Heckklappe 2 und ihr Wandbereich 3 unversehrt bleiben.

Die Schutzabdeckeinrichtung kann auch an einem vorderen Wandbereich eines Fahrzeugs, beispielsweise an der vorderen Motorhaube eines Kraftfahrzeugs angeordnet sein. Das Blendenelement ist vorzugsweise in seinem vertikal mittleren bis unteren Bereich mit dem Wandbereich des Fahrzeugs verbunden. Das Blendenelement kann mehr als einen Hohlraum aufweisen und aus einem beliebigen Werkstoff bzw. aus mehreren Werkstoffen mit einer an sich beliebigen Form gefertigt sein. Weist die äußere Sichtwand des Blendenelements einen unteren Wandflächenbereich auf und ist das Blendenelement an einer Frontklappe eines Fahrzeugs vorgesehen, so kann der untere Wandflächenbereich nach unten oder vorne unten gerichtet sein. Ist das Blendenelement an einer Frontklappe eines Fahrzeugs vorgesehen, so kann das Blendenelement eine den Hohlraum von unten begrenzende Wandung aufweisen, die bei geschlossener Frontklappe nach vorne oder nach vorne oben gerichtet ist. Außerdem kann das Blendenelement eine den Hohlraum von unten begrenzende Wandung aufweisen, die sich bei geschlossener Frontklappe über die mit der Frontklappe verbundene Befestigungswand des Blendenelements hinaus nach hinten oder nach hinten unten vorstehend erstreckt. Das Blendenelement ist verwendet, um als deformierbares Element bei einem unfallbedingten Aufprall eine möglichst geringe Kraft in die Karosseriestruktur des Fahrzeugs und in den Wandbereich einzuleiten. Da zur Vermeidung einer unfallbedingten Beschädigung des Wandbereiches der Wandbereich in einem entsprechenden Abstand von der Stoßaufnahmeseite des Stoßfängers angeordnet ist, soll das Blendenelement außerdem aus Designgründen einen größeren stufenförmigen Übergang von der Stoßaufnahmeseite des Stoßfängers zu dem Wandbereich optisch abdecken. Das beispielsweise an einer Frontklappe oder Heckklappe eines Kraftfahrzeugs angeordnete Blendenelement soll eine ausreichende Steifigkeit aufweisen, damit es beim normalen Öffnen und Schließen der Frontklappe oder Heckklappe nicht beschädigt wird. Das Blendenelement kann an vorgegebenen Stellen gezielt geschwächt sein, damit bei einer übermäßigen Belastung des Blendenelements beispielsweise wenigstens ein übermäßig belasteter Bereich des Blendenelements von dem Blendenelement abgetrennt wird, wodurch eine Beschädigung des Wandbereiches vermieden werden soll. Eine gezielte Schwächung des Blendenelements kann durch wenigstens eine Knickstelle, Kerbe oder Materialschwächung erfolgen. Eine Kraftumleitung kann durch eine Abstützung des Blendenelements an stabileren Bereichen der Fahrzeugstruktur erfolgen. Dies kann begünstigt werden, indem das Blendenelement an dem bestreffenden Kraftübertragungsbereich in eine Abstützung oder einen Formschluss gerät und dadurch nicht aus der Belastungsrichtung ausweichen kann. Eventuell wird dabei das Blendenelement etwas deformiert. Die Kraftumleitung wird beispielsweise durch Abstützung des Wandbereiches an stabileren Bereichen der Fahrzeugstruktur erreicht. Die Lastaufnahme kann an dem Blendenelement erfolgen.

## Patentansprüche

1. Schutzabdeckeinrichtung (1) an einem vorderen oder hinteren Wandbereich (3) eines Fahrzeugs, die ein äußeres Blendenelement (5) aufweist, das über einem Stoßfänger (6) etwa horizontal angeordnet und mit dem Wandbereich (3) verbunden ist, und das Blendenelement (5) zumindest über einen horizontalen Bereich einen in einem vertikalen Fahrzeuglängsschnitt rahmenförmigen Querschnitt aufweist, der zumindest einen Hohlraum (8) einschließt, **dadurch gekennzeichnet, dass** der vordere oder hintere Wandbereich (3) ein etwa vertikaler Wandbereich (3) einer Frontklappe oder Heckklappe (2) eines Kraftfahrzeugs ist, und die äußere Sichtwand (9) des Blendenelements (5) einen unteren Wandflächenbereich (9a) aufweist, der bei geschlossener Frontklappe nach vorne unten bzw. bei geschlossener Heckklappe (2) nach hinten unten gerichtet ist, und das Blendenelement (5) eine den Hohlraum (8) von unten begrenzende Wandung (11) aufweist, die bei geschlossener Frontklappe nach vorne oben oder bei geschlossener Heckklappe (2) nach hinten oben gerichtet ist.

2. Schutzabdeckeinrichtung nach Patentanspruch 1, **dadurch gekennzeichnet, dass** das Blendenelement (5) in seinem vertikal mittleren bis unteren Bereich eine etwa vertikale Befestigungswand (10) aufweist, die mit dem Wandbereich (3) des Fahrzeugs verbunden ist.

3. Schutzabdeckeinrichtung nach Patentanspruch 1 oder 2, **dadurch gekennzeichnet, dass** das Blendenelement (5) in seinem unteren horizontalen Bereich in einem vertikalen Fahrzeuglängsschnitt einen rahmenförmigen Querschnitt aufweist.

4. Schutzabdeckeinrichtung nach einem der Patentansprüche 1 bis 3, **dadurch gekennzeichnet, dass** das Blendenelement (5) eine äußere Sichtwand (9) aufweist, die sich über den rahmenförmigen Querschnitt hinaus nach oben erstreckt.

5. Schutzabdeckeinrichtung nach Patentanspruch 1, **dadurch gekennzeichnet, dass** das Blendenelement (5) eine den Hohlraum (8) von unten begrenzende Wandung (11) aufweist, die sich bei geschlossener Frontklappe über die mit der Frontklappe verbundene Befestigungswand des Blendenelements hinaus nach hinten oder nach hinten unten vorstehend erstreckt oder sich bei geschlossener Heckklappe (2) über die mit der Heckklappe (2) verbundene Befestigungswand (10) des Blendenelements (5) hinaus nach vorne oder nach vorne unten vorstehend erstreckt.

6. Schutzabdeckeinrichtung nach einem der Patentansprüche 1 bis 5, **dadurch gekennzeichnet, dass** das Blendenelement (5) eine den Hohlraum (8) von unten begrenzende Wandung (11) aufweist, die wenigstens eine Kerbe (12) oder wenigstens eine Materialverdünnung aufweist, die bei einem unfallbedingten Aufprall eines Gegenstandes oder einer Person auf das Blendenelement (5) eine elastische und/oder plastische Verformung der unteren Wandung (11) des Blendenelements (5) nach oben erzwingt oder erleichtert.

7. Schutzabdeckeinrichtung nach einem der Patentansprüche 2 bis 6, **dadurch gekennzeichnet, dass** die Befestigungswand (10) den Hohlraum (8) des Blendenelements (5) auf der dem Wandbereich (3) zugewandten Seite von vorne oder hinten begrenzt und zumindest in einem Bereich mit einem Aufnahmeprofil (13) für ein Befestigungselement (4) zum Verbinden des Blendenelements (5) mit dem Wandbereich (3) verbunden ist.

8. Schutzabdeckeinrichtung nach Patentanspruch 7 **dadurch gekennzeichnet, dass** an wenigstens einem Übergangsbereich von dem Aufnahmeprofil (13) zu der Befestigungswand (10) des Blendenelements (5) eine Kerbe (14, 15) oder Materialverdünnung vorgesehen ist, wodurch sich in dem Übergangsbereich die Befestigungswand (10) von dem mit dem Wandbereich (3) verbundenen Aufnahmeprofil (13) lösen kann, wenn bei einem unfallbedingten Aufprall eines Gegenstandes oder einer Person auf das Blendenelement (5) eine konstruktiv vorgegebene Grenzkraft auf den Wandbereich (3) des Fahrzeugs übertragen wird, bei der sich der Wandbereich (3) allenfalls elastisch, jedoch nicht plastisch verformt.

## Claims

1. A protective covering device (1) on a front or rear wall region (3) of a motor vehicle and comprising an outer screen element (5) disposed approximately horizontally over a bumper (6) and connected to a wall region (3), and the screen element (5), at least over a horizontal region, has a frame-like cross-section in a vertical longitudinal cross-section of the vehicle, enclosing at least one cavity (8), **characterised in that** the front or rear wall region (3) is an approximately vertical wall region (3) of a bonnet or tailgate (2) of a motor vehicle and the outer visible wall (9) of the screen element (5) has a bottom wall-surface region (9a) which extends forwards and downwards when the bonnet is closed and backwards and downwards when the tailgate (2) is closed, and the screen element (5) has a wall (11) bounding the bottom of the cavity (8) and extending forwards and upwards when the bonnet is closed and backwards and upwards when the tailgate (2) is closed.

2. A protective covering device according to claim 1, **characterised in that** the screen element (5), in its vertically central to lower region, has an approximately vertical fastening wall (10) connected to the wall region (3) of the vehicle.

3. A protective covering device according to claim 1 or claim 2, **characterised in that** the screen element (5) in its bottom horizontal region, has a frame-like cross-section in a vertical longitudinal section of the vehicle.

4. A protective covering device according to any of claims 1 to 3, **characterised in that** the screen element (5) has an outer visible wall which extends upwards over the frame-like cross-section.

5. A protective covering device according to claim 1, **characterised in that** the screen element (5) has a wall (11) which bounds the bottom of the cavity (8) and extends backwards or downwards over the fastening wall of the screen element connected to the bonnet when the bonnet is closed, or extends forwards or forwards and downwards over the fastening wall (10) of the screen element (5) connected to the tailgate (2) when the tailgate (2) is closed.

6. A protective covering device according to any of claims 1 to 5, **characterised in that** the screen element (5) has a wall (11) which bounds the bottom of the cavity (8) and has at least one notch (12) or at least one thin place which, in the event of a collision between the screen element (5) and an object or person during a crash, causes or facilitates elastic and/or plastic deformation upwards of the bottom wall (11) of the screen element (5).

7. A protective cover device according to any of claims 2 to 6, **characterised in that** the fastening wall (10) bounds the front or rear of the cavity (8) in the screen element (5) on the side facing the wall region (3) and, in at least one region, is connected to a profile (13) for receiving a fastening element (4) for connecting the screen element (5) to the wall region (3).

8. A protective covering device according to claim 7, **characterised in that** in at least one transition region from the profile (13) to the fastening wall (10) of the screen element (5) there is a notch (14, 15) or thin place with the result that in the transition region, the fastening wall (10) can come loose from the profile (13) connected to the wall region (3) if, in the event of a collision between the screen element (5) and an object or person during an accident, a critical force, determined by the construction, is transmitted to the wall region (3) of the vehicle, whereby in the worst case the wall region (3) is elastically but not plastically deformed.

## Revendications

1. Installation de recouvrement de protection (1) d'une région de paroi avant ou arrière (3) d'un véhicule ayant un élément de cache extérieur (5) sensiblement horizontal au-dessus du pare-choc (6) et relié à une région de paroi (3) et sur au moins une région horizontale, l'élément de cache (5) a une section en forme de cadre dans la section longitudinale verticale du véhicule, englobant au moins une cavité (8),
installation **caractérisée en ce que**
la région de paroi avant ou arrière (3) est la région de paroi (3) sensiblement verticale du capot avant ou arrière (2) d'un véhicule, et
la paroi visible (9) extérieure de l'élément de cache (5) a une région de surface de paroi (9a) inférieure qui, lorsque le capot avant est fermé, est dirigée vers l'avant et vers le bas et lorsque le capot arrière (2) est fermé, est dirigée vers l'arrière et vers le bas et l'élément de cache (5) a une paroi (11) délimitant la cavité (8) vers le bas, cette paroi, lorsque le capot avant (2) est fermé, est dirigée vers l'avant et vers le haut et lorsque le capot avant (2) est fermé, est dirigée vers l'arrière et vers le haut.

2. Installation de recouvrement de protection selon la revendication 1,
**caractérisée en ce que**
l'élément de cache (5) présente, dans sa zone verticale moyenne jusque dans sa zone inférieure, une paroi de fixation (10) sensiblement verticale reliée à la région de paroi (3) du véhicule.

3. Installation de recouvrement de protection selon la revendication 1 ou 2,
**caractérisée en ce que**
dans sa région horizontale inférieure, l'élément de cache (5) a une section en forme de cadre dans la section verticale longitudinale du véhicule.

4. Installation de recouvrement de protection selon l'une des revendications 1 à 3,
**caractérisée en ce que**
l'élément de cache (5) a une paroi visible extérieure (9) se prolongeant vers le haut au-delà de la section en forme de cadre.

5. Installation de recouvrement de protection selon la revendication 1,
**caractérisée en ce que**
l'élément de cache (5) a une paroi (11) délimitant vers le bas la cavité (8), et
lorsque le capot avant (2) est fermé, cette paroi s'étend au-delà de la paroi de fixation de l'élément de cache reliée au capot avant, vers l'arrière ou en saillie vers l'arrière et le bas, et
lorsque le capot arrière (2) est fermé, cet élément s'étend au-delà de la paroi de fixation (10) de l'élément de cache (5) reliée au capot (2), vers l'avant ou vers l'avant et vers le bas.

6. Installation de recouvrement de protection selon l'une des revendications 1 à 5,
**caractérisée en ce que**
l'élément de cache (5) a une paroi (11) délimitant vers le bas la cavité (8), cette paroi ayant au moins une encoche (12) ou au moins une réduction d'épaisseur de matière qui, en cas de choc accidentel d'un objet ou d'une personne contre l'élément de cache (5), produit une déformation élastique et/ ou plastique vers le haut de la paroi inférieure (11) de l'élément formant cache (5), ou facilite cette déformation.

7. Installation de recouvrement de protection selon l'une des revendications 2 à 6,
**caractérisée en ce que**
la paroi de fixation (10) délimite vers l'avant ou l'arrière, la cavité (8) de l'élément de cache (5) sur le côté tourné vers la région de paroi (3) ou du moins est reliée dans une région à un profilé de réception (13) d'un élément de fixation (4) pour relier l'élément de cache (5) à la région de paroi (3).

8. Installation de recouvrement de protection selon la revendication 7,
**caractérisée en ce que**
dans au moins une région transitoire entre le profilé de réception (13) et la paroi de fixation (10) de l'élément de cache (5), il y a une encoche (14, 15) ou une réduction d'épaisseur de matière permettant, dans la région transitoire, à la paroi de fixation (10) de se libérer du profilé de réception (13) relié à la région de paroi (3) si, en cas de choc par accident, un objet ou une personne arrive sur l'élément de cache (5) en transmettant une force limite prédéfinie par construction à la région de paroi (3) du véhicule et pour laquelle la région de paroi (3) se déforme en tous les cas de manière élastique mais non plastique.
